# EUROPÄISCHE PATENTANMELDUNG

(11) **EP 0 616 835 A1**
(43) Veröffentlichungstag der Anmeldung: **28.09.1994**
(21) Anmeldenummer: 94890040.2
(22) Anmeldetag: 16.02.1994
(51) Int. Cl.: B01D 53/32, B01J 19/08, B01J 19/12

(54) **Vorrichtung zum Abbau von in einem Gasstrom enthaltenen Schadstoffen**

(30) Priorität: 22.03.1993 AT 564/93
(71) Anmelder: Panning, Peter, A-2860 Ungerbach 53 (AT); Silberbauer, Heinz, A-3374 Säusenstein 4 (AT)
(72) Erfinder: Panning, Peter, A-2860 Ungerbach 53 (AT); Silberbauer, Heinz, A-3374 Säusenstein 4 (AT)
(74) Vertreter: Hübscher, Heiner, Dipl.-Ing.

(57) **Zusammenfassung**

Um bei einer Vorrichtung zum Abbau von in einem Gasstrom enthaltenen Schadstoffen, die einen Strömungskanal (1) mit wenigstens einer Drahtelektrode (2) und zumindest einer mit der Drahtelektrode (2) zusammenwirkenden Gegenelektrode (3) zur Erzeugung eines veränderlichen elektrischen Hochspannungsfeldes aufweist, einen zufriedenstellenden Schadstoffabbau sicherzustellen, wird vorgeschlagen, daß die zu Querschwingungen anregbare Drahtelektrode (2) in axialer Richtung über wenigstens eine Zugfeder (7) abgestützt wird und/oder zumindest abschnittsweise eine Zugfeder bildet.

## Beschreibung

Die Erfindung bezieht sich auf eine Vorrichtung zum Abbau von in einem Gasstrom enthaltenen Schadstoffen, bestehend aus einem Strömungskanal, der wenigstens eine Drahtelektrode und zumindest eine mit der Drahtelektrode zusammenwirkende Gegenelektrode zur Erzeugung eines veränderlichen elektrischen Hochspannungsfeldes im Bereich der Gasströmung aufweist.

Um in einem Gasstrom enthaltene Schadstoffe, beispielsweise nitrose Gase, abzubauen, ist es bekannt (US-PS 4 695 358), den Gasstrom einem pulsierenden, elektrischen Hochspannungsfeld zwischen einer Drahtelektrode und einer Flächenelektrode auszusetzen. Aufgrund der im Bereich der Drahtelektrode hohen Feldstärke, die gegen die Flächenelektrode hin rasch abnimmt, kann im Bereich der Drahtelektrode eine wirksame Stoßanregung der abzubauenden Moleküle durch frei gewordene Elektronen erzielt werden, wenn die Parameter des elektrischen Hochspannungsfeldes, insbesondere die Pulsfrequenz und die Impulsdauer, an die Anregungsbedingungen der abzubauenden Gasmoleküle angepaßt werden. Die freien Elektronen werden durch die hohe Feldstärke im Bereich der Drahtelektrode entsprechend beschleunigt und bewirken einerseits eine Stoßionisation der Gasmoleküle unter Bereitstellung zusätzlicher Elektronen sowie anderseits im Falle unelastischer Stöße eine Anregung der Gasmoleküle, so daß die aufgenommene Anregungsenergie für einen vorteilhaften Ablauf der angestrebten chemischen Abbaureaktionen sorgt. Da durch die Kollision von Gasmolekülen und Ionen aufgrund der vergleichbaren Massen keine ausreichende Anregungsenergie sichergestellt werden kann, kann nur der Elektronenstrom, nicht aber der Ionenstrom den chemischen Reaktionsablauf durch eine Molekülanregung unterstützen, die wiederum auf den unmittelbaren Umgebungsbereich der dünnen Drahtelektrode beschränkt ist, so daß die Wirtschaftlichkeit eines solchen Abbauverfahrens im Hinblick auf den Energieeinsatz nicht gegeben ist.

Der Erfindung liegt somit die Aufgabe zugrunde, diese Mängel zu vermeiden und eine Vorrichtung der eingangs geschilderten Art mit einfachen Mitteln so zu verbessern, daß mit einem vergleichsweise niedrigen Energieeinsatz ein weitgehender Abbau der in einem Gasstrom enthaltenen Schadstoffe zufolge einer vorteilhaften Molekülanregung sichergestellt werden kann.

Die Erfindung löst die gestellte Aufgabe dadurch, daß die zu Querschwingungen anregbare Drahtelektrode in axialer Richtung über wenigstens eine Zugfeder abgestützt ist und/oder zumindest abschnittsweise eine Zugfeder bildet.

Aufgrund der schwingungsfähigen Lagerung wird die Drahtelektrode durch das angelegte, veränderliche elektrische Hochspannungsfeld durch Resonanzen zu Querschwingungen angeregt, deren Amplitude von den wirksamen axialen Federkräften abhängt und daher über diese Federkräfte auf die geometrischen Verhältnisse des Strömungskanales im Bereich der Elektroden abgestimmt werden kann, so daß sich die Wirkung einer schwingenden Drahtelektrode auf einen im Vergleich zu einer herkömmlichen, nicht federnd abgestützten Drahtelektrode vielfachen Strömungsquerschnitt erstreckt, ohne den Energieeinsatz zu erhöhen. Die axiale Federabstützung stellt die für eine größere Schwingungsweite erforderliche Elektrodenlänge sicher, wobei die Drahtelektrode ohne Gefahr eines elektrischen Überschla-ges bis nahe an die Gegenelektrode ausschwingen kann, die aus einer Draht-, Flächen- oder Spitzenelektrode bestehen kann. Mit Hilfe der schwingungsfähig gelagerten Drahtelektrode können daher bei geeignet gewählten Betriebsparametern die abzubauenden Gasmoleküle ausreichend angeregt werden, damit die chemische Abbaureaktion vorteilhaft abläuft.

Diese chemischen Abbaureaktionen benötigen allerdings eine entsprechende Reaktionszeit, die dann in günstiger Weise zur Verfügung gestellt werden kann, wenn im Bereich des veränderlichen, sich zwischen den Elektroden ergebenden elektrischen Feldes und/oder stromabwärts davon wenigstens eine Filterschicht aus einem oberflächenreichen Adsorptionsmittel für die abzubauenden Schadstoffe in dem Strömungsweg des Gasstromes vorgesehen ist. Durch die Anlagerung der noch nicht abgebauten Schadstoffmoleküle an der Oberfläche des Adsorptionsmittels verbleiben diese Moleküle bis zum vollständigen Abbau im Bereich der Filterschicht, wobei durch eine katalytische Beschichtung des Adsorptionsmittels die chemische Abbaureaktion unterstützt wird. Obwohl eine Anordnung der Filterschicht im Wirkungsbereich des elektrischen Feldes aufgrund der möglichen Anregung besonders günstige Abbaubedingungen schafft, kann die Filterschicht auch stromabwärts des elektrischen Feldes vorgesehen sein, weil davon ausgegangen werden kann, daß zumindest ein Großteil der abzubauenden Schadstoffmoleküle im vorgelagerten elektrischen Feld für eine erfolgreiche Abbaureaktion ausreichend angeregt wurden. Dementsprechend empfiehlt es sich, die Filterschicht der mit Durchtrittsöffnungen für den Gasstrom versehenen Gegenelektrode unmittelbar vor- oder nachzulagern.

Ist mit einer Staubbelastung des zu behandelnden Gasstromes zu rechnen, so können die Gegenelektrode und/oder die Filterschicht an eine Spüleinrichtung angeschlossen werden, um die sich anlagernden Feststoffteilchen mit der Spülflüssigkeit auszutragen.

Um besonders hohe Abbauraten sicherzustellen, kann in weiterer Ausbildung der Erfindung dem Strömungskanal wenigstens ein auf die Gasströmung gerichteter Sender für elektromagnetische Wellen zugeordnet sein, der für eine zusätzliche Anregung der abzubauenden Moleküle sorgt, wie dies an sich bekannt ist. Als Sender kommen Lichtsender für infrarotes oder ultraviolettes Licht, insbesondere Laserlicht, aber auch Mikrowellensender sowie Sender bis hinunter in den Längswellenbereich in Frage, wobei die Parameter der elektromagnetichen Wellen entsprechend den Anregebedingungen der abzubauenden Schadstoffe zu wählen sind. Die Sender für elektromagnetische Welle werden dabei vorteilhaft im Bereich des elektrischen Feldes oder stromabwärts davon vorgesehen, um einerseits diese Sender vor einer allfälligen Staubbelastung des Gasstromes zu schützen und um anderseits eine durch die Anregung über das elektrische Feld bedingte Verschiebung der Anregefrequenzen in den langwelligeren Bereich ausnützen zu können, was einen geringeren Energieeinsatz erlaubt.

Die erforderliche Reaktionszeit für den durch die elektromagnetischen Wellen angeregten Abbau der Schadstoffmoleküle kann wiederum durch eine Filterschicht aus einem Adsorptionsmittel für die abzubauenden Stoffe sichergestellt werden, wobei sich die Filterschicht in Richtung der Gasströmung nach dem Sender für die elektromagnetischen Wellen befinden muß.

In der Zeichnung ist der Erfindungsgegenstand beispielsweise dargestellt. Es zeigen
- Fig. 1: eine erfindungsgemäße Vorrichtung zum Abbau von in einem Gasstrom enthaltenen Schadstoffen in einem schematischen Axialschnitt,
- Fig. 2: diese Vorrichtung in einem Querschnitt nach der Linie II-II der Fig. 1,
- Fig. 3: eine der Fig. 1 entsprechende Darstellung einer Konstruktionsvariante,
- Fig. 4: eine weitere Konstruktionsvariante in einem schematischen Horizontalschnitt in Strömungsrichtung,
- Fig. 5: die Vorrichtung nach Fig. 4 in einem Vertikalschnitt quer zur Strömungsrichtung,
- Fig. 6: eine weitere Konstruktionsvariante in einem Schnitt in Strömungsrichtung und
- Fig. 7: eine weitere Konstruktionsvariante ebenfalls in einem Schnitt in Strömungsrichtung.

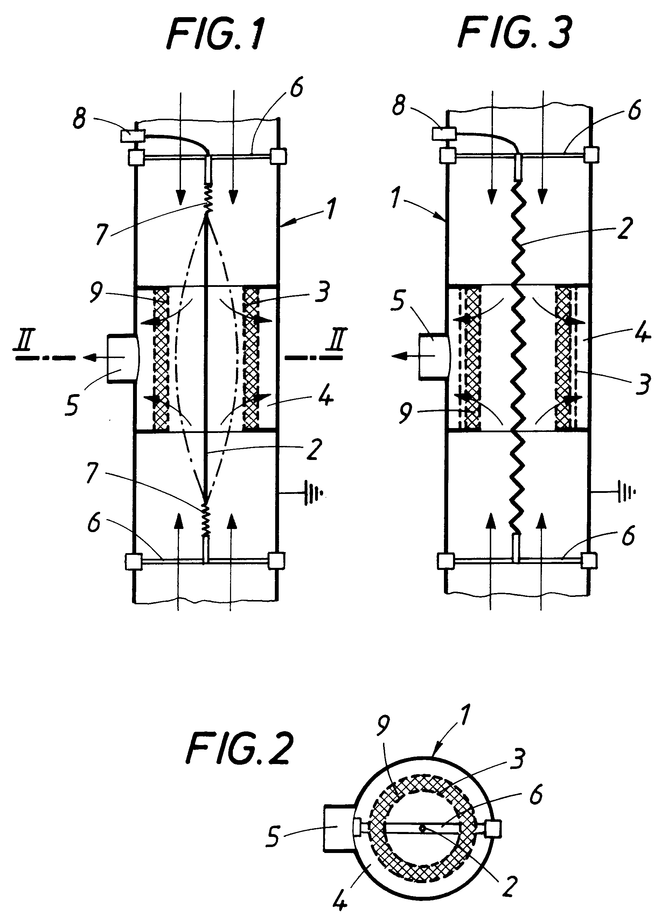

Die Vorrichtung zum Abbau von in einem Gasstrom enthaltenen Schadstoffen nach den Fig. 1 und 2 besteht im wesentlichen aus einem rohrförmigen Strömungskanal 1 für den Gasstrom, in dem eine koaxiale Drahtelektrode 2 angeordnet ist, die mit einer mit Durchtrittsöffnungen für den Gasstrom versehenen Gegenelektrode 3 zusammenwirkt, die die Drahtelektrode 2 in Form eines koaxialen Zylinders umschließt und den Gasdurchtritt zu einem ringförmigen Sammelraum 4 für die schadstofffreie Gasströmung bildet. Aus diesem Sammelraum 4 wird dann das Gas über einen Auslaßstutzen 5 abgezogen.

Die Drahtelektrode 2 wird innerhalb des Strömungskanales 1 von Halterungen 6 getragen, an die die Drahtelektrode 2 über Zugfedern 7 angeschlossen ist, so daß die Drahtelektrode 2 im Strömungskanal 1 zu Querschwingungen anregbar ist, wie sie in Fig. 1 strichpunktiert angedeutet sind. Die Drahtelektrode 2 wird über eine elektrische Anschlußkupplung 8 an eine veränderliche elektrische Hochspannung angeschlossen, so daß sich zwischen der Drahtelektrode 2 und der Gegenelektrode 3, die mit dem geerdeten Strömungskanal 1 elektrisch verbunden ist, ein veränderliches elektrisches Hochspannungsfeld ergibt, über das die abzubauenden Schadstoffmoleküle vorteilhaft angeregt werden können, und zwar mit Hilfe freigewordener Elektronen, die im Bereich der Drahtelektrode aufgrund der in der unmittelbaren Umgebung der Drahtelektrode herrschenden großen Feldstärke ausreichend beschleunigt werden, um die für eine Stoßanregung erforderliche Anregungsenergie sicherzustellen. Die Drahtelektrode, die zur Erreichung entsprechend hoher Feldstärken mit einem Durchmesser von beispielsweise 0,01 mm ausgeführt wird und vorteilhaft aus Wolfram besteht, kann zusätzlich eine Edelmetallbeschichtung aufweisen, um einen leichteren Ladungsaustritt zu erreichen. Zu diesem Zweck kommen aber auch andere Beschichtungen in Frage, wobei sich Übergangsmetalle, insbesondere Seltenerdmetalle, oder Chelate, z. B. Phthalozyanine, anbieten. Die Gegenelektrode 3 kann aus einem üblichen metallischen Werkstoff hergestellt sein.

Die schadstoffbelastete Gasströmung gelangt innerhalb des Strömungskanales 1 in den Bereich des elektrischen Feldes zwischen der Drahtelektrode 2 und der Gegenelektrode 3, wobei die über das elektrische Feld zu Schwingungen erregte Drahtelektrode 2 den Strömungsquerschnitt innerhalb der zylindrischen Gegenelektrode 3 bestreicht, was zu einer wirtschaftlichen Anregung der abzubauenden Schadstoffmoleküle führt. Solche Schadstoffe können flüchtige organische Verbindungen sein, die aufgrund ihrer Anregung mit dem im Gas üblicherweise enthaltenen Luftsauerstoff reagieren und zu Kohlendioxid und Wasserdampf abgebaut werden. Im Gasstrom enthaltene nitrose Gase werden in Anwesenheit von oxidationsfähigen Substanzen, beispielsweise Kohlenmonoxid und Ammoniak, zu Sauerstoff und Stickstoff abgebaut. In ähnlicher Weise können Gifte, wie polychlorierte Biphenyle, oder Dioxine zu unschädlichen Reaktionsprodukten abgebaut werden. Wegen der Querschwingungen der Drahtelektrode können die abzubauenden Schadstoffmoleküle durch die Durchmischung in ausreichender Weise angeregt werden, um mit Sauerstoff zu reagieren, ohne Gefahr zu laufen, daß sich Ozon oder Nitroxide bilden, weil die Anregungsenergie beschränkt bleiben kann.

Damit die Schadstoffe in einem gewünschten Ausmaß abgebaut werden, bevor die Gasströmung die Vorrichtung über den Austrittsstutzen 5 verläßt, kann eine Filterschicht 9 den ringförmigen Sammelraum 4 gegenüber dem Strömungskanal 1 abschließen. Diese Filterschicht 9, die aus einem oberflächenreichen Adsorptionsmittel für die abzubauenden Schadstoffe besteht, hält die angeregten Schadstoffmoleküle gegenüber der übrigen Gasströmung so lange zurück, bis sie abgebaut sind. Als Adsorptionsmittel können verschiedene Stoffe eingesetzt werden, beispielsweise Kieselgur, Aluminiumoxid, Aerogele, Aktivkohle oder chromatographische Materialien, wobei die Wirkung dieser Filterschicht durch Oxidationskatalysatoren gesteigert werden kann. Als Oxidationskatalysatoren können katalytisch aktive Keramikmaterialien, Mangandioxid oder Mischoxidkatalysatoren von Übergangselementen und Seltenerdenelementen eingesetzt werden.

Die Filterschicht 9 kann im unmittelbaren Anschluß an die Gegenelektrode 3 angeordnet sein, wie dies im Ausführungsbeispiel nach den Fig. 1 und 2 dargestellt ist. Eine solche Konstruktion ergibt sich vorteilhaft dann, wenn die Filterschicht selbst leitend ist, wie dies beispielsweise bei einer Aktivkohle als Adsorptionsmittel der Fall ist. Nachteilig bei einer Anordnung der Filterschicht 9 in Strömungsrichtung hinter der Gegenelektrode 3 ist, daß die adsorbierten Moleküle nicht mehr angeregt werden können, weil sie außerhalb des elektrischen Hochspannungsfeldes zu liegen kommen. In der Fig. 3 ist eine Ausführungsvariante dargestellt, bei der die Filterschicht 9 in Strömungsrichtung vor der Flächenelektrode 3 vorgesehen ist, so daß sich die adsorbierten Moleküle noch im Einflußbereich des elektrischen Feldes befinden, wodurch die chemische Abbaureaktion, die durch die Stoßanregung eingeleitet wurde, zusätzlich unterstützt wird. Im Gegensatz zu der Ausführungsform nach den Fig. 1 und 2 ist die Drahtelektrode 2 auch nicht über Zugfedern 7 an der Halterung 6 befestigt, sondern bildet selbst eine solche Feder, was jedoch wiederum die Möglichkeit einer Querschwingung mit entsprechend großer Schwingungsweite eröffnet, um ausreichend viele Moleküle anzuregen.

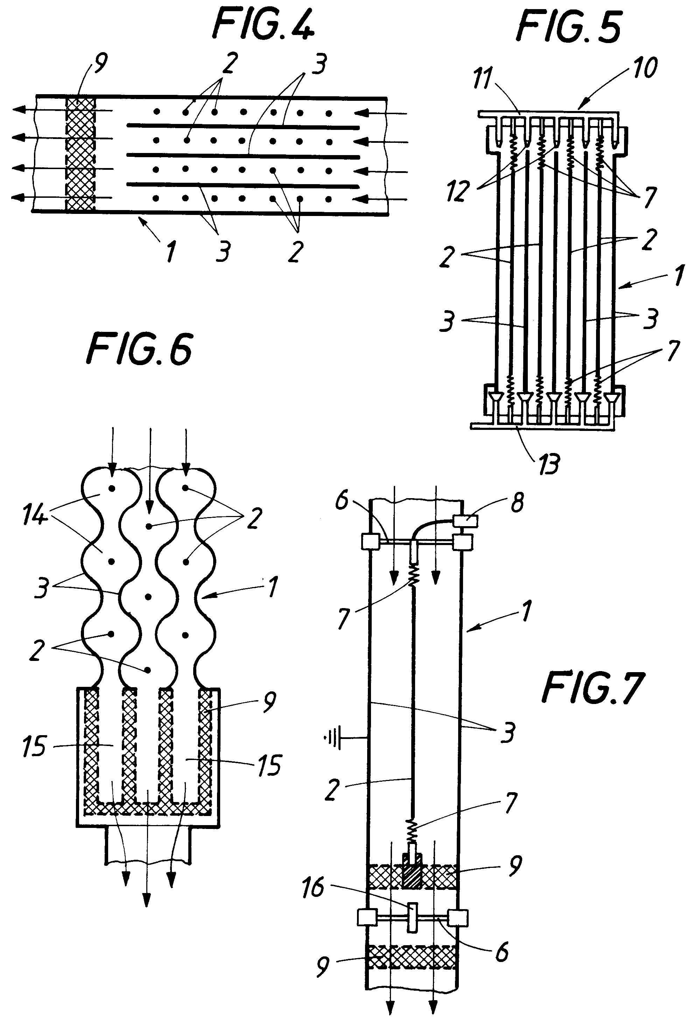

Die Ausführungsform nach den Fig. 4 und 5 zeigt eine Vielzahl von Drahtelektroden 2, die über Zugfedern 7 schwingungsfähig gelagert und reihenweise zwischen Gegenelektroden 3 in Form von vertikalen Zwischenwänden angeordnet sind. Mit der dadurch ermöglichten Vielzahl von Drahtelektroden kann die Anregungswirkung entsprechend erhöht und auch auf größere Gasvolumen abgestellt werden. Eine solche Konstruktion eignet sich insbesondere für Strömungskanäle 1 mit rechteckigem Querschnitt, wobei die Drahtelektroden 2 nicht zwangsläufig quer zur Gasströmung verlaufen müssen, wie dies in den Fig. 4 und 5 dargestellt ist. Stromabwärts der Elektroden 2 und 3 ist wiederum eine Filterschicht 9 aus einem oberflächenreichen Adsorptionsmittel vorgesehen, um die angeregten Moleküle während der erforderlichen Reaktionszeit zurückzuhalten.

Zur Berücksichtigung einer Belastung des Gasstromes mit Feststoffteilchen kann eine Spüleinrichtung 10 vorgesehen sein, die für eine Spülung der Gegenelektroden sorgt. Zu diesem Zweck ist gemäß der Fig. 5 eine Zuleitung 11 für die Spülflüssigkeit vorgesehen, die über Verteilerleitungen 12 auf die zu bespülenden Flächen aufgebracht wird, die entlang die Spülflüssigkeit abfließt, um mit dem abgespülten Feststoffanteil in einer Sammelleitung 13 aufgefangen zu werden.

Nach der Fig. 6 bilden mehrere Gegenelektroden 3 zylindrische Wirkungsräume 14 um die reihenweise angeordneten Drahtelektroden, wodurch Elektrodenschwingungen besonders vorteilhaft ausgenützt werden können, zumal die Wirkungsräume 14 für eine turbulente Gasströmung sorgen. Im Anschluß an diese Gegenelektroden 3 bildet der Strömungskanal 1 wiederum einen Abschnitt mit einer Filterschicht 9, die zur Vergrößerung der adsorbierenden Oberfläche in Verlängerung der einzelnen Strömungswege zwischen den Gegenelektroden 3 Taschen 15 bilden.

Reicht die Anregung der abzubauenden Schadstoffmoleküle durch das veränderliche elektrische Feld nicht für die angestrebte Schadstofffreiheit der Gasströmung aus, so kann zusätzlich ein Sender 16 für eine elektromagnetische Strahlung eingesetzt werden, die für eine weitere Molekülanregung und damit eine Unterstützung der chemischen Abbaureaktionen sorgt. In der Fig. 7, die eine Vorrichtung mit einer solchen zusätzlichen Anregung zeigt, ist der Sender 16, beispielweise ein Sender für ultraviolettes Licht oder ein Mikrowellensender, zwischen zwei Filterschichten 9 aus einem Adsorptionsmittel angeordnet. Die Filterschicht 9 zwischen dem Sender 16 einerseits und dem elektrischen Feld zwischen der Draht elektrode 2 und der vom Strömungskanal 1 selbst gebildeten Gegenelektrode 3 anderseits könnte entfallen. Die strömungsabwärts gelegene Filterschicht 9 ist jedoch notwendig, um einen vorzeitigen Schadstoffaustrag aus dem Strömungskanal 1 zu verhindern.

## Patentansprüche

1. Vorrichtung zum Abbau von in einem Gasstrom enthaltenen Schadstoffen, bestehend aus einem Strömungskanal 1, der wenigstens eine Drahtelektrode 2 und zumindest eine mit der Drahtelektrode 2 zusammenwirkende Gegenelektrode 3 zur Erzeugung eines veränderlichen elektrischen Hochspannungsfeldes im Bereich der Gasströmung aufweist, dadurch gekennzeichnet, daß die zu Querschwingungen anregbare Drahtelektrode (2) in axialer Richtung über wenigstens eine Zugfeder (7) abgestützt ist und/oder zumindest abschnittsweise eine Zugfeder bildet.

2. Vorrichtung nach Anspruch 1, dadurch gekennzeichnet, daß im Bereich des veränderlichen, sich zwischen den Elektroden davon wenigstens eine Filterschicht (9) aus einem oberflächenreichen Adsorptionsmittel für die abzubauenden Schadstoffe in dem Strömungsweg des Gasstromes vorgesehen ist.

3. Vorrichtung nach Anspruch 1 oder 2, dadurch gekennzeichnet, daß die Filterschicht (9) der mit Durchtrittsöffnungen für den Gasstrom versehenen Gegenelektrode (3) unmittelbar vor- oder nachgelagert ist.

4. Vorrichtung nach einem der Ansprüche 1 bis 3, dadurch gekennzeichnet, daß die Gegenelektrode (3) und/oder die Filterschicht (9) an eine Spüleinrichtung (10) angeschlossen sind.

5. Vorrichtung nach einem der Ansprüche 1 bis 4, dadurch gekennzeichnet, daß dem Strömungskanal (1) wenigstens ein auf die Gasströmung gerichteter Sender (16) für elektromagnetische Wellen zugeordnet ist.

6. Vorrichtung nach Anspruch 5, dadurch gekennzeichnet, daß der Sender (16) für elektromagnetische Wellen als Lichtsender im Frequenzbereich von infrarotem bis ultraviolettem Licht ausgebildet ist.

7. Vorrichtung nach Anspruch 5, dadurch gekennzeichnet, daß der Sender (16) für elektromagnetische Wellen als Mikrowellensender oder als Sender bis hinunter in den Längswellenbereich ausgebildet ist.

8. Vorrichtung nach einem der Ansprüche 5 bis 7, dadurch gekennzeichnet, daß der Sender (16) für elektromagnetische Wellen im Bereich des elektrischen Feldes oder stromabwärts davon vorgesehen ist.

9. Vorrichtung nach Anspruch 8, dadurch gekennzeichnet, daß der Sender (16) für elektromagnetische Wellen in Strömungsrichtung des Gasstromes zumindest vor einer Filterschicht (9) aus einem Adsorptionsmittel für die abzubauenden Schadstoffe angeordnet ist.

10. Vorrichtung nach einem der Ansprüche 5 bis 9, dadurch gekennzeichnet, daß der Strömungskanal (1) für den bzw. die Sender (16) wenigstens eine elektromagnetische Wellen reflektierende Wand aufweist und/oder einen Resonanzraum bildet.

11. Vorrichtung nach einem der Ansprüche 1 bis 10, dadurch gekennzeichnet, daß das elektrische Hochspannungsfeld einen Gleichspannungsanteil aufweist.
